# EUROPEAN PATENT APPLICATION

(11) **EP 1 741 894 A1**
(43) Date of publication of application: **10.01.2007**
(21) Application number: 06115875.4
(22) Date of filing: 22.06.2006
(51) Int. Cl.: F01P 11/10

(54) **Plenum cooling system, work vehicle and method**

(30) Priority: 06.07.2005 US 175558
(71) Applicant: Deere & Company, Moline, IL 61265-8098 (US)
(72) Inventor: Meyer, Douglas, Dubuque, IA 52001 (US); Wilkinson, Martin, Davenport, IA 52807 (US); Maifield, Christopher, Dubuque, IA 52001 (US); Young, David, Asbury, IA 52002 (US)
(74) Representative: Löser, Iris

(57) **Abstract**

An cooling system for a work vehicle (1) employing a plenum cooling compartment (100) that is separated from the engine compartment (50) by a baffle (104). The plenum cooling compartment (100) is formed by the baffle (104), side doors (105, 106), a fan door (102, 301) and a floor (111) and contains a heat exchanger (103a, 103b, 103c, 103d, 103e). A centrifugal fan (102a, 301 a) draws outside ambient air into the plenum cooling compartment (100) removing large debris from the air in the process due to the structure of the compartment (100) to form clean air. The clean air is then moved through the heat exchanger (103a, 103b, 103c, 103d, 103e) before being moved out of the plenum cooling compartment (100).

## Description

The invention relates to the structure and operation of cooling systems for vehicles and to methods of supplying intake air to internal combustion engines. More specifically, it relates to a method, system and apparatus for supplying pre-cleaned ambient air to multiple heat exchangers on a vehicle where the heat exchangers are used to form a plenum cooling compartment. A portion of the pre-cleaned air may be used to supply non-preheated air to the engine.

Most mobile construction machines have an above-hood air intake. The above-hood air intake is usually covered by a shield to prevent the entrance of rain and other precipitation. Above-hood air intakes are typically designed to be low profile, i.e., evince a small signature. However, these intakes are required to be high enough to minimize the entry of dust and other debris settling near the hood and far enough from the exhaust stack associated with these machines to minimize the intake of preheated air. Pre-cleaners are typically available for above-hood air intake designs and are used to remove some of the debris from the intake air and, thusly, extend engine air filter life.

Some mobile construction machines are provided with conventional under-hood air intake systems having air intake tubes with inlet openings located in the engine compartment. When these systems have perforations in the hood of the engine compartment, the inlet opening is arranged to prevent the intake of rain and other precipitation. Thus, the inlet opening of the air intake tube is angled such that intake air enters in a direction that is horizontal to or at least partially opposite to the direction of the precipitation as it enters the engine compartment. Other under-hood air intake designs include air intake tubes that are routed to compact cooling package areas where the air inlets are located in areas separate from the engine compartment.

Conventional above-hood air intake systems for work vehicles obstruct visibility for the work vehicle operator. This is a consequence of attempting to meet the noted demands of locating the air intake (1) high enough to eliminate the entry of dust and debris over the hood and (2) far enough from the exhaust stack to eliminate or minimize the intake of preheated air. These disadvantages are only intensified by the pre-cleaners that are often attached to these systems in high debris environments.

A major disadvantage of conventional under-hood air intake systems where the intake port is located in the engine compartment is that they tend to intake preheated air via convection and radiation with respect to the engine. This is accentuated when these systems have perforations in the hood as the intake port must be angled away from the perforations and more toward the engine which preheats the air. In conventional systems where the intake port is located in a compact cooling package area, the intake is restricted and preheated by heat exchangers. Finally, it is not possible to adapt conventional above-hood pre-cleaners to under-hood air intake designs without extensive modifications to such machines.

The object to be met with the present invention then is overcome this disadvantage.

This object is met according to the invention by the teaching of claims 1, 6 or 7 respectively, while features developing the solution in an advantageous manner are set forth in the further claims.

The invention overcomes each of the above disadvantages by providing an under hood air intake system having an air intake tube routed to an area of a plenum cooling compartment through which ambient air flows. The plenum cooling compartment is formed by a baffle, a floor, a top door, a front door and at least one side door. The baffle separates the plenum cooling compartment from an engine compartment that is separately accessible. The air intake tube is routed to the plenum cooling compartment via the baffle such that the air inlet is located near the baffle in the plenum cooling compartment. Perforations are provided in the at least one side door of the plenum cooling compartment to allow an influx of ambient air and to allow accumulated debris removed from the ambient air, via the perforations, to be removed by gravity. Similar perforations are also provided in the top door. In one exemplary embodiment, a fan draws ambient air into the plenum cooling compartment via the perforations and out of the cooling compartment via at least one heat exchanger. The at least one heat exchanger is located a minimum distance from the inlet opening at the baffle in order to reduce or minimize flow restrictions and the intake of preheated air. The at least one heat exchanger may include multiple heat exchangers forming a fully or partially enclosed heat exchanger package within the plenum cooling compartment.

Embodiments of the invention will be described in detail, with references to the following figures, wherein:
- Fig. 1: is a view of a work vehicle in which the invention may be used;
- Fig. 2: is an oblique view of a rear portion of the vehicle illustrated in Fig. 1;
- Fig. 3: is an oblique view of the cooling and engine compartments showing a body of an exemplary air cleaner rotated such that the intake tube is horizontally oriented and routed through the baffle wall;
- Fig. 4: is an oblique view of the cooling and engine compartments showing a portion of the body of the air cleaner rotated such that the intake tube is vertically oriented and connected to an above-hood pre-cleaner;
- Fig. 5: is an oblique view of the cooling compartment with the hood removed and the fan door open; and
- Fig. 6: is an oblique view of the cooling compartment with the hood removed and the fan door open where a centrifugal fan is used to move air through the heat exchangers, out of the cooling compartment and into the outside environment.

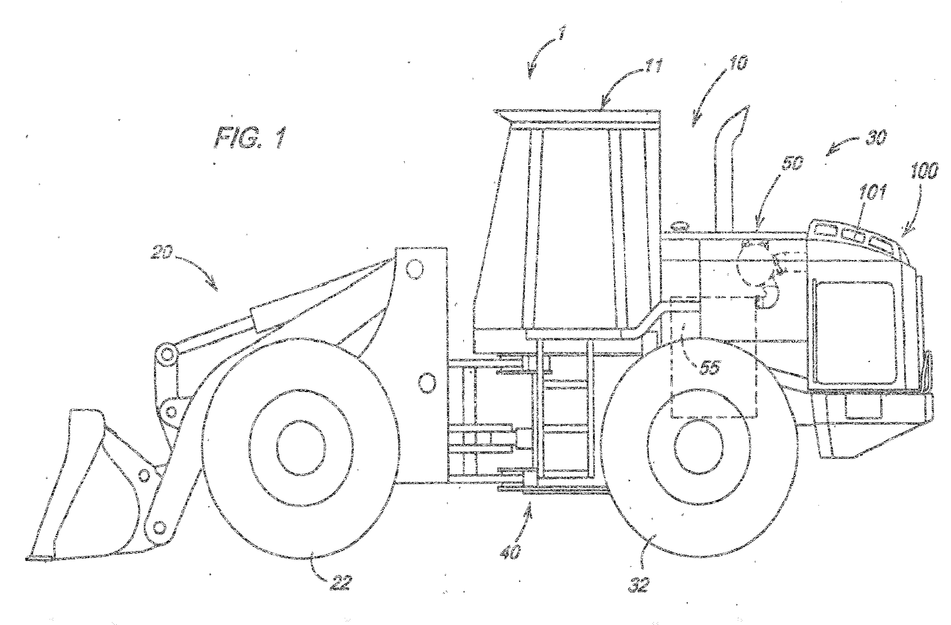

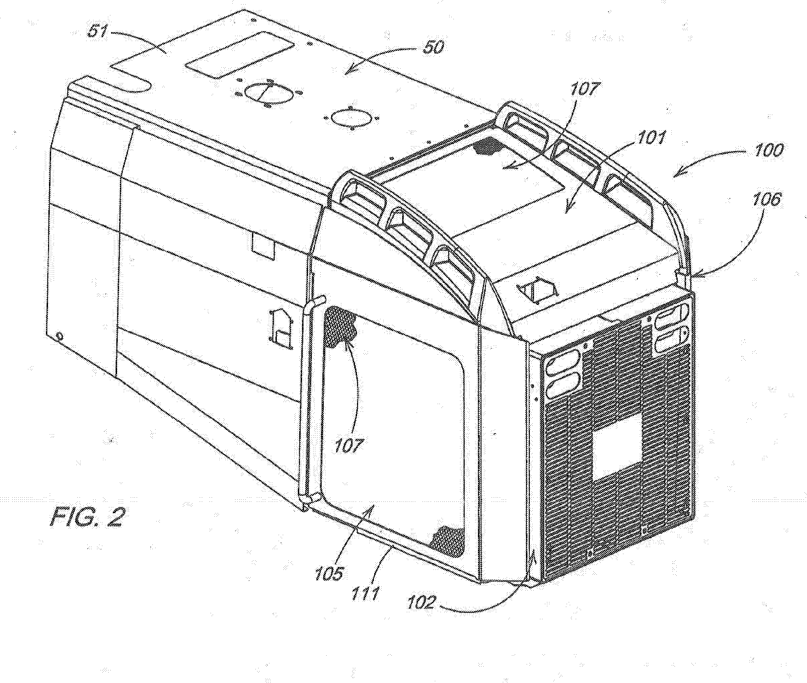

Fig. 1 illustrates a work vehicle in which the invention may be used. The particular work vehicle illustrated in Fig. 1 is an articulated four wheel drive loader 1 having a body 10 that includes a front body portion 20 pivotally connected to a rear body portion 30 by vertical pivots 40, the loader being steered by pivoting of the front body portion 20 relative to the rear body portion 30 in a manner well known in the art. The rear body portion 30 includes an engine compartment 50 and a separately accessible plenum cooling compartment 100. The front and rear body portions 20 and 30 are respectively supported on front drive wheels 22 and rear drive wheels 32. An operator's station 11 is provided on the rear body portion 30 and is generally located above the vertical pivots 40. The front and rear drive wheels 22 and 32 propel the vehicle along the ground and are powered in a manner well known in the art. Fig. 2 shows a detailed oblique view of the rear body portion 20 illustrated in Fig. 1.

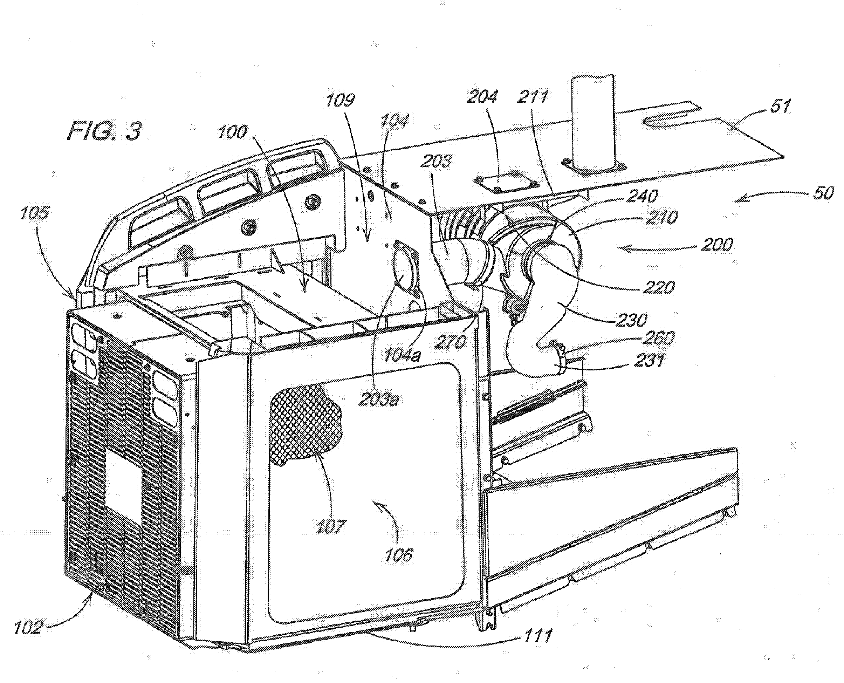

Figs. 2, 3 and 4 are views of the plenum cooling compartment 100 and the separately accessible engine compartment 50 with the top door 101, two side doors 105, 106 and a fan door 102 of the plenum cooling compartment 100 illustrating an air intake system 200 including, a filter body 210, a filter body clamp 220, an air output tube 230, a first output tube clamp 240 connecting the air output tube 230 to the filter body 210, a second output tube clamp 260 connecting an outlet side 231 of the air output tube 230 to an engine 55, and an air intake tube 203 routed through a wall or baffle 104 separating the plenum cooling compartment 100 from the engine compartment 50. As illustrated in Figs. 2, 3 and 4, the top door 101, the fan door 102, two side doors 105 and 106, the floor 111 and the baffle 104 form the plenum cooling compartment 100. The two side doors 105 and 106 and the top door 101 contain perforations 107 for removing large debris from ambient air flowing into the plenum cooling compartment. The filter body clamp 220 is fixedly attached to the frame via the brace 211 and supports the filter body 210.

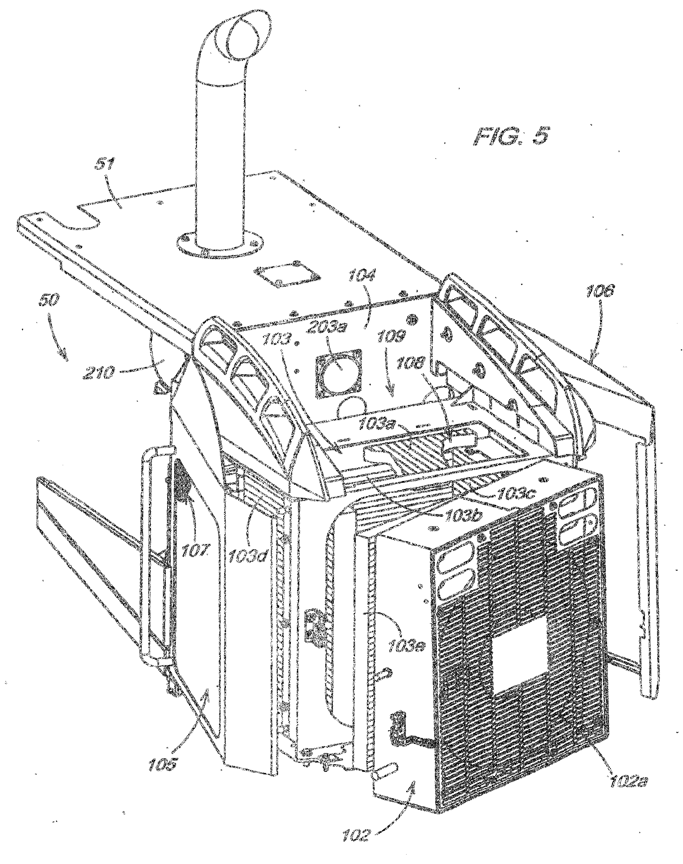

As illustrated in Fig. 5, in this embodiment the at least one heat exchanger 103 includes five heat exchangers 103a, 103b, 103c, 103d and 103e forming a heat exchanger package 108 located at a rear end of the vehicle and filling only a portion of the cooling compartment 100. This arrangement creates a gap 109 between the baffle 104, near which the air inlet 203a is located, and the heat exchanger package 108. A fan 102a forms a part of the fan door 102 and serves to draw ambient air, via the perforations 107 in the top door 101 and the two side doors 105, 106 into the plenum cooling compartment 100, via the heat exchangers package 108, and out of the plenum cooling compartment 100, via the fan door 102. As a result of this arrangement, non-preheated air flows in the gap 109. Thus, the air intake system 200 supplies the ambient air flowing in the gap 109 to the engine 55.

The plenum cooling compartment is designed such that the gap 109 between the heat exchanger package 108 and the baffle 104 is sufficiently large to reduce or minimize any air flow restrictions and the intake of preheated air. The size of the gap 109 varies with the size and design of the work vehicle.

The perforations 107 are sized to: (1) to block the entrance of airborne debris to the cooling compartment; and (2) to avoid frequent plugging of screens or perforations 107. Perforation sizes for these two somewhat conflicting objectives may be based on many factors, including: the nature and size of the debris, the convenience of the operator, the relative costs of operation, etc. A standard perforation size such as, for example, 3 mm, may be more suitable for work vehicles used in a variety of environments. Thus, a perforation size of about 3 mm is recommended for use in a variety of light debris environments, i.e., environments in which a significant portion of the debris has maximum dimensions greater than about 3 mm.

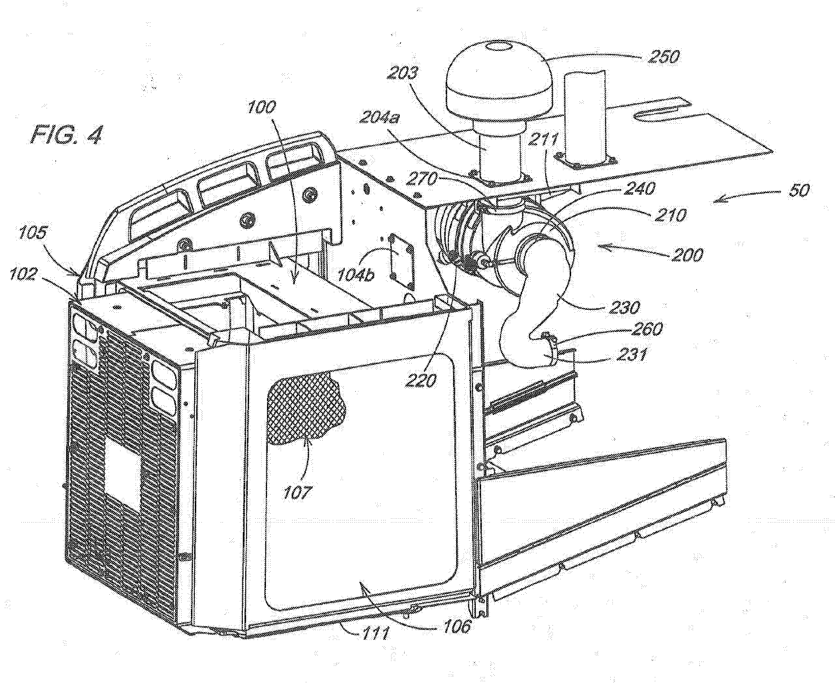

In environments of extremely fine debris, i.e., environments in which a significant portion of the debris has maximum dimensions less than about 3 mm, the air intake system may be switched from an under-hood intake of air from the cooling compartment 100 to an above hood intake of air from an above-hood pre-cleaner 250 as shown in Fig. 4. This may be accomplished by: (1) removing the air intake tube 203 from the baffle 104 and covering the baffle inlet opening 104a with a baffle inlet door 104b; (2) loosening the filter body clamp 220 holding the filter body 210 in place; (3) loosening the air output tube clamp 240 fixedly holding the engine air output tube 230 to the filter body 210; (4) removing an above-hood inlet door 204 on the engine compartment hood 51; (5) rotating the filter body 210 to a position allowing the air inlet tube 203 to be routed through an opening 204a in the engine compartment hood 51 provided by the removal of the above-hood inlet door 204 while allowing the engine air output tube 230 to remain connected to the engine and to rotate with respect to the filter body 210; (6) connecting the air intake tube 203 to the above-hood pre-cleaner 250; (7) tightening the body clamp 220 to fixedly hold the filter body 210 in place; (8) tightening the output tube clamp 240 to fixedly hold the engine air output tube 230 in place. The outlet side 231 of air output tube 230 remains fixedly connected to the engine 55. Removal of the air intake tube 203 from the baffle 104a may be facilitated by loosening a tube clamp 270. The tube clamp 270 may be, subsequently tightened once the air intake tube 203 is properly positioned.

In environments of extremely heavy debris a pressurization option is provided wherein the fan reverses periodically to withdraw air from outside the cooling compartment 100 via the fan door 102 and to force it through the perforations 107 in the top door 101 and the side doors 105, 106 via the heat exchanger package 108. This allows the fan to forcefully remove debris accumulated on or in the perforations 107.

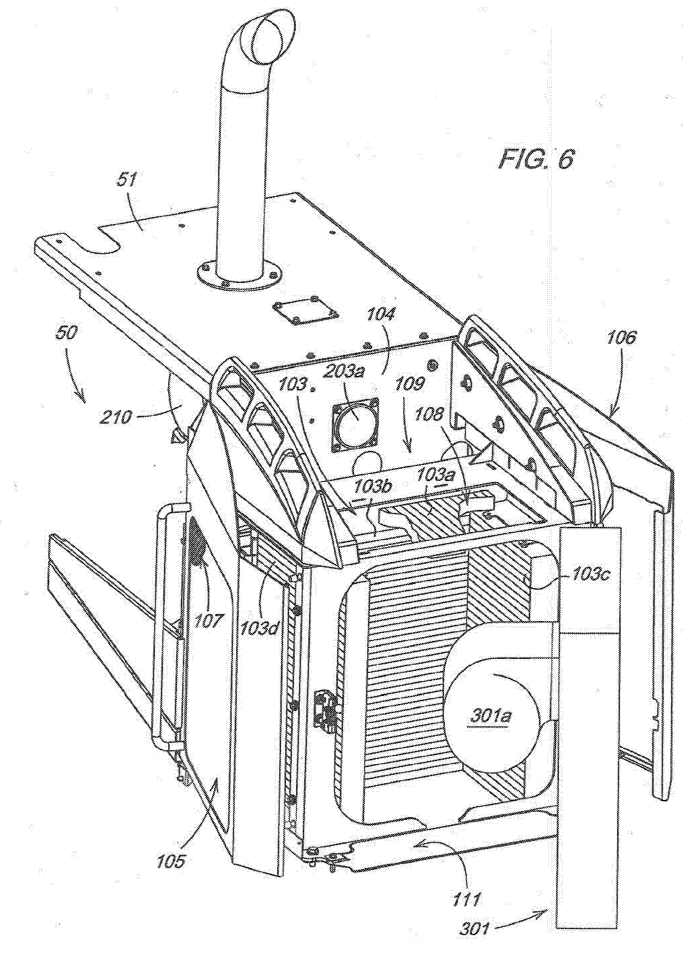

Fig. 6 illustrates an oblique and open view of an alternate plenum cooling compartment 300 where a centrifugal fan 301 a, mounted on a fan door 301, is used to draw air into the heat exchangers 103a, 103b, 103c, 103d and 103e, via the perforations 107, and then blow air that has already flowed through each heat exchanger out of the plenum cooling compartment 300 and into the surrounding environment. The centrifugal fan 301 a handles a larger volume of air more efficiently and with a lower noise level than the axial fan 102a. The centrifugal fan 301a accomplishes this by moving the air in a direction tangential to a circle in an enclosed area before moving it out of the plenum cooling compartment 300 in a somewhat concentrated stream. The top door 101 (not shown in Fig. 6), the fan door 301, the two side doors 105 and 106, the floor 111 and the baffle 104 form the alternate plenum cooling compartment 300.

Having described the illustrated embodiment, it will become apparent that various modifications can be made without departing from the scope of the invention as defined in the accompanying claims.

## Claims

1. A cooling system of a work vehicle (1), comprising a centrifugal fan (102a, 301a); at least one heat exchanger (103a, 103b, 103c, 103d, 103e); a top door (101); a floor (111); at least one side door (105, 106), at least one of the top door (101) and the at least one side door (105, 106) having perforations (107); and a baffle (104), the at least one heat exchanger (103a, 103b, 103c, 103d, 103e), the top door (101), the floor (111), the at least one side door (105, 106) and the baffle (104) forming a plenum cooling compartment (100), the baffle (104) separating the plenum cooling compartment (100) from the engine (55), the fan (301 a) moving a first ambient air from a first area outside the plenum cooling compartment (100) into the plenum cooling compartment (100) via the perforations (107) to form ambient plenum air, the centrifugal fan (301 a) moving a first of the ambient plenum air through the at least one heat exchanger (103a, 103b, 103c, 103d, 103e) to an area outside the plenum cooling compartment (100).

2. The cooling system according to claim 1, **characterized in that** the at least one side door (105, 105) includes a first perforated screen (107) that removes debris from the ambient air before the ambient air enters the plenum cooling compartment (100).

3. The cooling system according to claim 1 or 2, **characterized in that** the top door includes a second perforated screen (107) that removes debris from the ambient air before the ambient air enters the plenum cooling compartment (100).

4. The cooling system according to one or several of the previous claims, **characterized in** by a fan door (102, 301), the fan door (102) including the centrifugal fan (102a, 301a).

5. The cooling system according to one or several of the previous claims, **characterized in that** the fan (102a, 301 a) causes all of the ambient plenum air to flow through the at least one heat exchanger (103a, 103b, 103c, 103d, 103e).

6. A work vehicle **characterized by** a cooling system, preferably a plenum cooling system, according to one or several of the previous claims.

7. A method of cooling a system of a work vehicle (1), the work vehicle (1) having a plenum cooling package, the plenum cooling package including at least one heat exchanger (103a, 103b 103c, 103d, 103e); and an enclosure, the enclosure forming a plenum cooling compartment (100), the method comprising moving ambient air from an area outside of the plenum cooling compartment (100) toward an area inside the plenum cooling compartment (100); removing large debris from the ambient air to form clean air; moving the clean air to an area inside the plenum cooling compartment (100); moving the clean air through the at least one heat exchanger (103a, 103b, 103c, 103d, 103e) to form processed air; moving the processed air in a direction tangential to a circle to form tangential air; and moving the tangential air to an area outside the plenum cooling compartment (100).

8. The method according to claim 7, **characterized in that** the plenum cooling package includes a floor (111); a top door (101); a fan door (102, 301), the fan door (102, 301) including a centrifugal fan (102a, 301 a); a baffle (104); at least one side door (105, 106) and a hood (51), the top door (101) and the at least one side door having perforations (107), the top door (101), the fan door (102, 301), the baffle (104), the at least one side door (105, 106) and the floor (111) forming a plenum cooling compartment (100), the method comprising moving ambient air from an area outside the plenum cooling compartment (100) toward an area inside the plenum cooling compartment (100); moving the ambient air through the perforations to remove large debris and form clean air as the ambient air moves toward the area inside the plenum cooling compartment (100); moving the clean air into the area inside the plenum cooling compartment (100); and moving the clean air through the at least one heat exchanger (103a, 103b, 103c, 103d, 103e) to an area outside the plenum cooling compartment (100) by drawing the clean air in an axial direction and causing the clean air to flow in a direction tangential to a circle before blowing it through the fan door (102, 301).
